# FASCICULE DE BREVET EUROPEEN

(11) **EP 3 052 444 B1**
(45) Date de publication et mention de la délivrance du brevet: **21.02.2018**
(21) Numéro de dépôt: 14798954.5
(22) Date de dépôt: 30.09.2014
(51) Int. Cl.: C01B 33/037

(54) **PROCÉDÉ POUR LA DÉSOXYDATION DU SILICIUM**
VERFAHREN ZUR DESOXIDATION VON SILICIUM
PROCESS FOR DEOXIDIZING SILICON

(30) Priorité: 03.10.2013 FR 1359611
(43) Date de publication de la demande: 10.08.2016
(73) Titulaire: Commissariat à l'Énergie Atomique et aux Énergies Alternatives, 75015 Paris (FR)
(72) Inventeur: BENMANSOUR, Malek, F-73290 La Motte Servolex (FR); DARWICHE, Sarah, F-38140 Rives (FR); GARANDET, Jean-Paul, F-92210 Saint-Cloud (FR); PELLETIER, David, F-73490 La Ravoire (FR)
(74) Mandataire: Nony
(86) Numéro de dépôt international: PCT/IB2014/064964
(87) Numéro de publication internationale: WO 2015/049634

(56) Documents cités:
- DD-A5- 285 226
- JP-A- 2012 236 723
- MAGNAVAL S ET AL: "Diagnostic of flow fields of silicon particles in an RF plasma for purification treatmentsDiagnostic of flow fields of silicon particles in an RF plasma for purification treatments", PROGRESS IN PLASMA PROCESSING OF MATERIALS, PROCEEDINGS OF THE INTERNATIONAL THERMAL PLASMA PROCESSES CONFERENCE, BEGELL HOUSE, US, 1 janvier 1997 (1997-01-01), pages 291-298, XP008097156,
- MORVAN D ET AL: "Photovoltaic silicon produced by thermal plasma: Influence of atomic hydrogen on oxygen elimination and passivation of the crystal defects", JOURNAL OF MATERIALS RESEARCH 1998 OCT MRS, vol. 13, no. 10, octobre 1998 (1998-10), pages 2709-2720, XP002726034,
- KROON R: "REMOVAL OF OXYGEN FROM THE SI(100) SURFACE IN A DC HYDROGEN PLASMA", JAPANESE JOURNAL OF APPLIED PHYSICS, JAPAN SOCIETY OF APPLIED PHYSICS, JP, vol. 36, no. 8, PART 01, 1 août 1997 (1997-08-01), pages 5068-5071, XP000749030, ISSN: 0021-4922, DOI: 10.1143/JJAP.36.5068
- KENJI NAKASHIMA ET AL: "EXISTENCE OF THRESHOLD DENSITY IN SILICON SURFACE CLEANING USING HYDROGEN ELECTRON CYCLOTRON RESONANCE PLASMA", APPLIED PHYSICS LETTERS, AMERICAN INSTITUTE OF PHYSICS, US, vol. 58, no. 23, 10 juin 1991 (1991-06-10) , pages 2663-2665, XP000233117, ISSN: 0003-6951, DOI: 10.1063/1.104800
- SALIMIAN S ET AL: "Etching of SiO2 in an electron cyclotron resonance argon plasma", APPLIED PHYSICS LETTERS USA, vol. 56, no. 14, 2 avril 1990 (1990-04-02) , pages 1311-1313, XP000149799, ISSN: 0003-6951

## Description

La présente invention se rapporte à un nouveau procédé pour la désoxydation de particules de silicium.

Le matériau le plus couramment utilisé pour l'élaboration des cellules photovoltaïques est le silicium dans sa forme massive qui représente 80 % du marché actuel. Ces cellules sont constituées d'une base d'une épaisseur d'environ 200 µm, appelée wafer, obtenue par sciage d'un lingot de silicium massif.

La découpe des lingots de silicium se fait actuellement par deux techniques. Une première méthode utilise des fils, qui par entrainement véhiculent un mélange abrasif (appelé *slurry*) à base de polyéthylène glycol (PEG) et de particules de carbure de silicium pour couper et roder le bloc de silicium. La seconde, qui est apparue plus récemment, utilise des fils sur lesquels des particules de carbone diamant sont fixées. Elle permet de découper les blocs de silicium à plus grande vitesse, une meilleure maitrise de l'épaisseur des wafers et engendre moins de défauts de surface.

Cette étape de découpe s'accompagne généralement d'une perte de matière sous forme de poudre (appelée *kerf loss*) d'environ 30 % à 40 % qui représente alors une part non négligeable dans le coût de la cellule solaire.

Dans l'objectif de diminuer ces coûts, il importe de recycler les poudres de silicium générées lors du sciage du lingot massif.

Quelle que soit la technique de découpe retenue, le recyclage des poudres de silicium issues du sciage nécessite, après leur séparation du fluide de refroidissement (appelé *coolant* - produit à base d'eau) et des particules de carbure de silicium (uniquement pour le premier procédé de découpe mentionné ci-dessus), une étape de désoxydation de surface visant à éliminer une couche de silice (SiO₂) qui s'est formée.

En effet, seules des poudres désoxydées, c'est-à-dire présentant une teneur en oxygène la plus faible possible, idéalement inférieure ou égale à 10 % en poids par rapport au poids total des poudres, peuvent être réintroduites dans la chaine de fabrication des lingots en mélange avec du matériau standard, de grade solaire ou encore de grade électronique.

Des techniques sont déjà proposées à des fins de réduire la teneur en oxygène dans la poudre de silicium recyclée.

La méthode la plus usuellement utilisée pour obtenir une désoxydation des poudres de sciage consiste à faire un traitement chimique de la surface des particules par des attaques acides. Ces traitements utilisent l'acide fluorhydrique (HF) comme agent de désoxydation [1].

Cette méthode s'avère efficace et permet d'atteindre des niveaux de teneur en oxygène d'environ 1 %. Toutefois, la cinétique de désoxydation dépend essentiellement de la teneur en HF dans la solution acide. De plus, cette méthode semble inadaptée à un passage à l'échelle industrielle dans la mesure où d'importantes quantités d'acide fluorhydrique, acide hautement toxique qu'il serait nécessaire de recycler, sont mises en oeuvre pour atteindre le rendement mentionné ci-dessus.

La réduction de la silice de surface peut également être réalisée par le silicium lui-même. A basse pression et à une température de 1 000 à 1 300°C ou à pression atmosphérique et à des températures de l'ordre de 1 600°C, la réduction de la silice par le silicium intervient pour donner, comme produit de réaction, le monoxyde de silicium SiO gazeux selon la réaction suivante : SiO₂ + Si → 2SiO. Cette réaction s'accompagne néanmoins par une importante perte de matière par volatilisation du silicium sous forme de SiO et génère des rendements matière très faibles.

De même, dans une gamme de température comprise entre 200 et 850°C il est également possible d'aboutir à une réduction de la silice par l'aluminium (procédé dit d'aluminothermie) selon la réaction globale : 3SiO₂ + 4Al →2Al₂O₃ + 3Si. Toutefois, le silicium issu de cette réaction forme un alliage avec le réducteur en excès [2], ce qui complique fortement la récupération de ce dernier. Un schéma réactionnel semblable se produit également en présence de magnésium ou de calcium comme agents réducteurs.

Enfin, l'utilisation de décharges plasma utilisant l'hydrogène comme réducteur est également connue de l'état de l'art [3,4]. La réduction des métaux oxydés suit en général le schéma réactionnel suivant :

MeₓO_{y} + 2nH → MeₓO_{y-n} + nH₂O

La source d'hydrogène excité peut être obtenue grâce à une décharge plasma. L'hydrogène est introduit en mélange avec un gaz vecteur, généralement de l'argon, et dissocié sous l'effet d'un champ électrique. Par exemple, en utilisant une décharge micro-onde l'oxyde de titane sous sa forme TiO₂ a pu être réduit sous la forme TiO par introduction de l'atome d'hydrogène dans la matrice de l'oxyde.

Par ailleurs, les procédés de plasma thermique sont connus pour leur application à des problématiques de purification, notamment en bore et en impuretés métalliques, sur des poudres de silicium de grade métallurgique dotées d'une granulométrie comprise entre 60 et 120 µm [5]. Une autre variante de procédé de désoxydation et d'élimination d'autres impuretés de poudres de silicium de tailles allant de 50 à 80 µm ou de 80 à 125 µm à l'aide d'un plasma est également connue [6].

Toutefois, l'utilisation de ce type de décharge plasma se révèle impossible pour la gamme de granulométrie des particules de sciage de lingots de silicium. En effet, de par la grande enthalpie de l'écoulement plasma, le traitement conduit à une évaporation totale des particules.

En conséquence, l'application des technologies actuellement disponibles à la désoxydation des particules de silicium issues du sciage de lingots n'est pas satisfaisante, voire envisageable au regard par exemple des spécificités de ces particules notamment en termes de taille mais également en termes de rendement ou de toxicité des produits utilisés.

La présente invention vise précisément à proposer un procédé donnant satisfaction aux exigences précitées.

Ainsi, la présente invention concerne un procédé utile pour la désoxydation de particules de silicium comprenant au moins les étapes consistant à :
(i) disposer de particules de silicium oxydées en surface et dotées d'une taille moyenne inférieure ou égale à 10 µm,
(ii) formuler lesdites particules à l'état d'agrégats d'une taille moyenne allant de 20 à 300 µm,
(iii) mettre en contact lesdits agrégats de l'étape (ii) avec un plasma thermique véhiculant des radicaux hydrogène dans des conditions propices à leur désoxydation et à leur non évaporation, la mise en contact étant réalisée en zone post-décharge et
(iv) récupérer un matériau désoxydé selon l'étape (iii) dans un bain de silicium liquide.

Par « particule », on entend au sens de l'invention un objet solide unitaire et individualisé. Selon l'invention, les particules sont dotées d'une taille moyenne inférieure ou égale à 10 µm. L'agrégat se différencie d'une particule au sens qu'il est constitué de plusieurs de ces particules agglomérées les unes aux autres. Les agrégats de la présente invention présentent une taille moyenne allant de 20 à 300 µm.

Pour les raisons détaillées ci-après, le procédé de l'invention s'avère avantageux à plusieurs titres.

Contre toute attente, la mise en présence de ces particules à l'état d'agrégats conformes à l'invention, avec le plasma réducteur permet d'accéder à une désoxydation optimale.

Ce procédé se prête avantageusement à un recyclage industriel immédiat des particules désoxydées par exemple pour la réalisation de lingots grâce à la récupération des particules directement dans un bain de silicium liquide.

Qui plus est, il est possible de poursuivre dans la même installation, le traitement à la surface du bain fondu afin de réduire la concentration d'oxygène non éliminé auparavant.

D'autres caractéristiques, avantages et modes d'application du procédé selon l'invention ressortiront mieux à la lecture de la description qui va suivre, donnée à titre illustratif et non limitatif, et en particulier en référence aux dessins annexés, sur lesquels :
- la figure 1 représente, de manière schématique et partielle, une installation adaptée à la mise en oeuvre d'un mode de réalisation du procédé selon l'invention ;
- la figure 2 représente un détail de la zone avoisinante de la sortie de la torche à plasma dans l'installation représentée en figure 1.

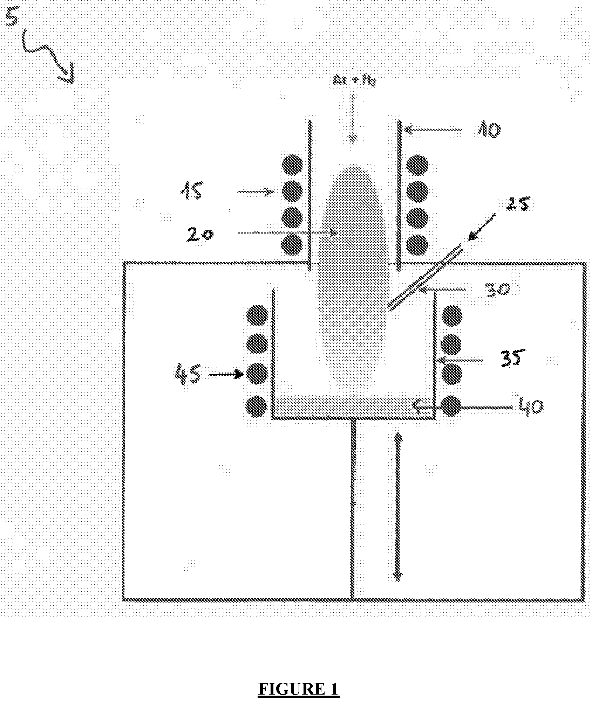

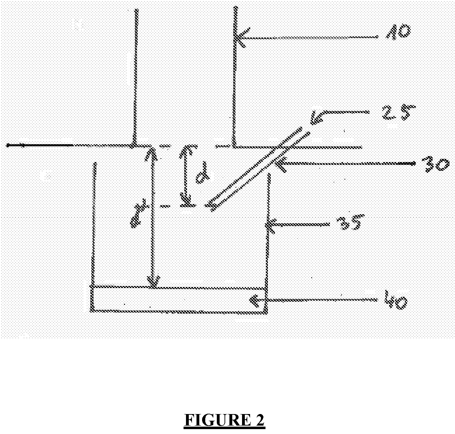

Il convient de noter que, pour des raisons de clarté, les différents éléments sur les figures 1 et 2, sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### PARTICULES DE SILICIUM

Comme précisé précédemment, les particules de silicium considérées dans le traitement selon l'invention sont généralement issues de la découpe de lingots de silicium.

Elles sont donc oxydées en surface et présentent une taille moyenne inférieure ou égale à 10 µm, voire inférieure à 2 µm.

Plus particulièrement, la taille moyenne de ces particules peut varier de 100 nm à 10 µm, de préférence de 200 nm à 2 µm.

Il est à noter que la taille moyenne des particules ou agrégats considérés selon l'invention peut être déterminée par analyse d'image à l'aide de microscopie électronique à balayage (MEB) ou de microscopie optique. Ces technologies permettent de déterminer la surface des objets observés et la taille moyenne des particules ou agrégats correspond alors à la racine carrée d'une telle surface.

Le choix entre l'une ou l'autre de ces techniques est opérée par l'homme du métier en fonction de l'ordre de grandeur des entités considérées. Ainsi, les objets de taille inférieure à 2 µm sont préférentiellement mesurés par MEB alors que les objets de taille supérieure à 2 µm se prêtent aussi bien à la technique MEB qu'à la microscopie optique.

La granulométrie laser peut aussi être utilisée dans la présente invention à titre de mesure complémentaire à l'analyse d'image.

Les particules de silicium oxydées en surface, présentent généralement une teneur en oxygène supérieure ou égale à 20 % en poids par rapport à leur poids total et avantageusement comprise entre 20 % et 30 %.

Cette teneur en oxygène peut par exemple être mesurée par la technique IGA (Interstitial Gas Analysis) connue de l'homme de l'art.

Selon une autre de ses spécificités, ces particules présentent en surface une couche d'oxyde de silicium d'une épaisseur allant de 5 nm à 50 nm.

### AGREGATS

Comme il ressort de ce qui précède, l'invention requiert la mise en oeuvre de l'étape de désoxydation sur des particules de silicium organisées à l'état d'agrégats d'une taille moyenne allant de 20 à 300 µm.

Plus particulièrement, la taille moyenne de ces agrégats peut aller de 50 µm à 200 µm

Bien que non limitée à une technique particulière, cette agrégation est avantageusement réalisée selon l'invention par atomisation séchage desdites particules de silicium.

Il est à noter que l'atomisation séchage met en oeuvre un liquide oxydant qui induit une oxydation supplémentaire des agrégats de silicium. En conséquence, le procédé selon l'invention a pour originalité de renforcer le degré d'oxydation du matériau à traiter préalablement à sa désoxydation. Contre toute attente, l'efficacité de cette désoxydation consécutive est optimisée.

La technique d'atomisation séchage est en particulier décrite dans le document « Droplet and Particle Size Relationship and Shell Thickness of Inhalable Lactose Particles during Spray Drying » de Jessica Elversson et al., Journal of Pharmaceutical Sciences, Vol. 92, No. 4, April 2003.

### PLASMA

Le procédé de l'invention est limité à l'usage d'un plasma thermique.

Avantageusement, il s'agit d'un plasma thermique à pression atmosphérique de type arc ou inductif.

Dans une torche à plasma par champ électrique (« plasma arc »), le plasma est produit par mise en contact d'un gaz plasmagène avec un arc électrique, ce dernier étant amorcé entre deux électrodes.

Dans une torche à plasma inductif, c'est-à-dire sans électrode, le plasma est généré par excitation haute fréquence de gaz plasmagène.

De préférence, le plasma de l'étape (iii) est généré à partir d'une torche à plasma, en particulier à l'aide d'une torche à plasma inductif par exemple à l'aide d'un générateur à couplage inductif radiofréquence (RF).

L'utilisation d'une torche à plasma inductif peut s'avérer avantageuse par rapport à une torche par champ électrique dans la mesure où elle permet de s'affranchir d'une pollution du matériau désoxydé par l'érosion de l'électrode haute-tension.

De plus, les plasmas inductifs présentent l'avantage d'avoir des vitesses d'écoulement nettement plus faibles ce qui permet des temps de résidence des agrégats assez longs favorisant ainsi l'interaction chimique mais également thermique.

La torche à plasma utilisée dans le procédé selon l'invention peut par exemple être dotée d'une puissance allant de 1 à 120 kW, préférentiellement de 10 à 60 kW et d'une fréquence allant de 1 à 20 MHz, préférentiellement de 2 à 5 MHz.

En ce qui concerne le débit gazeux de cette torche il peut être compris entre 40 et 250 L.min⁻¹, en particulier entre 60 et 150 L.min⁻¹.

De manière générale, la torche à plasma fonctionne à pression atmosphérique.

L'homme du métier est à même d'ajuster ces paramètres en fonction notamment de la taille des agrégats et de leur épaisseur de couche d'oxyde de silicium.

Par « gaz plasmagène(s) », on entend désigner le milieu gazeux, au sein duquel est créé le plasma.

Le gaz plasmagène considéré selon l'invention comprend de l'hydrogène associé à un gaz inerte annexe, dit vecteur et généralement choisi parmi l'argon, l'hélium, le néon et leurs mélanges. La proportion d'hydrogène dans le gaz plasmagène aussi appelé mélange de gaz plasmagène varie plus particulièrement de 0,5 à 50 % volumique, en particulier de 1 à 25 % volumique. Avantageusement, il s'agit d'un mélange d'hydrogène et d'argon.

Lorsque le plasma est formé, l'hydrogène se dissocie pour former des radicaux H* selon la réaction suivante :

H₂ + e^{-*} → 2H^{*} + e⁻

Les radicaux d'hydrogène ainsi formés sont véhiculés par le gaz vecteur associé, ce dernier étant de préférence un gaz inerte, avantageusement de l'argon.

Les agrégats considérés selon l'invention sont mis en contact avec le plasma dans des conditions propices à leur désoxydation et à leur non évaporation.

La désoxydation est réalisée selon la réaction chimique suivante :

SiO₂ (s) + 2H* → SiO (g) + H₂O (g)

Au cours de cette réaction, les radicaux hydrogénés formés dans le plasma réduisent la silice en monoxyde de silicium (SiO) gazeux, permettant ainsi aux agrégats de diminuer considérablement l'épaisseur de leur couche d'oxyde de silicium.

Cette réaction de désoxydation de surface des agrégats par réaction chimique avec les radicaux hydrogénés s'accompagne d'une fusion à coeur due au traitement thermique.

Les conditions de ce traitement sont ajustées par l'homme du métier de telle sorte à permettre cette fusion à coeur tout en limitant l'évaporation du silicium.

Ainsi, pour prévenir la manifestation d'un phénomène de vaporisation totale des agrégats, leur introduction au sein du plasma est avantageusement réalisée en zone post-décharge.

Au sens de l'invention, la « zone post-décharge », désigne la zone s'étendant entre la sortie de la torche à plasma et la surface du bain de silicium liquide.

Par « sortie de la torche à plasma », on entend la base inférieure du dispositif ou applicateur du plasma, autrement dit la base inférieure du tube, généralement cylindrique, dans lequel est mis en oeuvre le plasma.

L'introduction des agrégats dans cette zone permet de limiter efficacement la perte de matière par évaporation thermique du fait de températures plus faibles (de l'ordre de 3 000 à 5 000 K) comparativement à la zone comprise dans le tube de la torche à plasma. Il en découle un meilleur rendement matière.

En particulier, les agrégats peuvent être introduits à une distance (d) allant de 0,5 à 10 cm de la sortie de la torche à plasma, et plus précisément de 1 à 3 cm.

Le temps de séjour des agrégats dans le plasma de l'étape (iii) peut varier de 1 à 50 ms, de préférence de 5 à 20 ms.

L'ajustement de cette distance (d) et du temps de séjour relèvent clairement des compétences de l'homme de l'art.

Ainsi, pour des agrégats présentant une teneur en oxygène élevée, typiquement de l'ordre de 30 % en poids par rapport à leur poids total, il est avantageux de privilégier une injection proche de la sortie de la torche à plasma c'est-à-dire dans une zone où la température est plus élevée pour favoriser l'activation de la réaction de désoxydation et prolonger le séjour des agrégats injectés au sein du plasma.

En ce qui concerne l'injection des agrégats en zone post-décharge, elle est avantageusement réalisée *via* un gaz porteur, de préférence un gaz inerte, en particulier de l'argon.

De préférence, le gaz porteur est introduit à un débit allant de 1 à 20 L.min⁻¹, de préférence de 2 à 10 L.min⁻¹_{.}

Le procédé selon l'invention permet de récupérer aisément le matériau désoxydé de l'étape (iii) et ce, avec un bon rendement du fait que ce matériau est en phase liquide.

Plus précisément, lors de l'étape (iv), le matériau désoxydé de l'étape (iii) est récupéré dans un bain de silicium liquide.

Ce bain peut par exemple être préparé à partir de silicium préalablement fondu de préférence à l'aide d'un système de chauffage inductif ou résistif.

Le silicium contenu dans ce bain peut être choisi parmi du silicium standard, du silicium de grade solaire, du silicium de grade électronique et leurs mélanges.

Cette récupération du matériau désoxydé peut être opérée en continu dans le bain de silicium liquide. L'ensemble peut alors être réintroduit dans la chaîne de fabrication de lingots qui peuvent être utilisés notamment pour fabriquer des cellules photovoltaïques.

La surface du bain de silicium liquide est avantageusement localisée à une distance (d'), allant de 5 à 30 cm de la sortie de la torche, et plus particulièrement de 5 à 10 cm.

Le creuset contenant le bain de silicium peut être placé sur un dispositif de translation apte à déplacer le bain selon l'axe vertical de façon à ce que la distance (d') varie le moins possible tout au long du procédé.

Selon un mode de réalisation particulier, le procédé selon l'invention comprend en outre une étape (v) dans laquelle le bain de silicium liquide contenant le matériau désoxydé de l'étape (iii) subit un traitement avec le plasma thermique pour parfaire la désoxydation.

Cette étape supplémentaire permet ainsi de réduire encore la teneur en oxygène du matériau récupéré à l'étape (iv).

Afin que le traitement puisse continuer sur le bain de silicium liquide, la surface du bain de silicium liquide se trouve avantageusement à une distance (d") allant de 5 à 10 cm de la sortie de la torche, ledit bain liquide étant à une température inférieure à 1 600°C, de préférence inférieure à 1 550°C.

Avantageusement, le matériau obtenu à l'étape iv) ou le cas échéant à l'étape v) présente une teneur en oxygène inférieure ou égale à 10 % en poids, de préférence inférieure ou égale à 5 % en poids par rapport au poids total dudit matériau. Ces concentrations sont mesurées par la technique d'IGA soit sur le lingot solidifié, soit à partir de prélèvements réalisés en phase liquide puis solidifiés. Le poids en matériau désoxydé est parallèlement apprécié à partir de la différence de poids du bain de silicium liquide avant et après traitement.

Il sera fait référence, dans la suite du texte, aux figures 1 à 2 annexées, qui représentent, de manière schématique et partielle, une installation 5 adaptée à la mise en oeuvre d'un mode de réalisation du procédé de l'invention selon lequel la torche à plasma est de type inductif et les agrégats sont introduits en zone post-décharge.

L'installation comporte une torche à plasma inductif 10, sous la forme d'un tube, en matériau isolant, par exemple en quartz, destiné à la formation du plasma.

Le champ haute fréquence de création du plasma est produit par un enroulement bobiné autour du tube constitué de spires d'induction 15, alimenté par un générateur à haute fréquence de puissance suffisante.

On injecte dans la partie supérieure du tube un mélange de gaz plasmagène(s), par exemple de l'argon et de l'hydrogène. Au cours du transit des gaz dans le tube, et par couplage électromagnétique, se forme un jet de plasma 20.

Les agrégats de silicium 25 obtenus à l'étape (ii) sont injectés par exemple par le biais d'un gaz porteur, de préférence inerte en particulier de l'argon à l'entrée d'un injecteur 30 qui peut être en graphite.

De manière avantageuse, le diamètre de l'injecteur 25 au niveau de sa sortie peut être considérablement réduit par rapport au diamètre de l'entrée de l'injecteur de telle sorte à augmenter la vitesse des agrégats lors de leur sortie de l'injecteur par effet venturi et les forcer ainsi à pénétrer dans le plasma.

Le matériau désoxydé est ensuite recueilli dans un creuset 35 par exemple à base de graphite comportant un bain de silicium liquide 40. Le silicium formant le bain est préalablement fondu, et maintenu à l'état liquide à l'aide d'un système de chauffage résistif ou inductif. Selon un mode préférentiel de réalisation, le chauffage est inductif comportant des spires d'induction 45.

La figure 2 représente schématiquement la distance (d) qui correspond à la distance entre la sortie de la torche à plasma et la sortie de l'injecteur par lequel sont introduits les agrégats de silicium.

La figure 2 représente également la distance (d') qui correspond à la distance entre la sortie de la torche et la surface du bain de silicium.

Bien entendu, le dispositif peut comprendre, de façon classique, des moyens non représentés en figures 1 et 2, permettant de contrôler le débit d'alimentation de la torche, ainsi que le débit d'alimentation de l'injecteur 25, par exemple à l'aide de vannes.

L'invention va maintenant être décrite au moyen de l'exemple suivant donné bien entendu à titre illustratif et non limitatif de l'invention.

### EXEMPLE

Les poudres récupérées brutes lors du procédé de découpe au fil diamanté d'un lingot de silicium ont une taille comprise entre 600 nm et 1 µm. Elles sont mises en suspension aqueuse.

Des agrégats sont alors formés par atomisation séchage. Pour ce faire, les poudres sont introduites dans le réservoir d'un atomiseur de type Niro dont la turbine fonctionne à 7 000 tours par minute. La suspension aqueuse, appelée barbotine est alors injectée à un débit de 10 L.h⁻¹. Les agrégats obtenus présentent une taille moyenne mesurée par granulométrie laser comprise entre 60 et 80 µm.

Les agrégats sont ensuite traités par un plasma thermique d'argon hydrogéné, doté d'un taux d'hydrogène de 2 % volumique.

Le dispositif retenu est composé d'une torche qui permet de confiner la décharge plasma. Celle-ci est initiée à l'aide d'un générateur d'induction de type radiofréquence d'une puissance maximale de 25 kW et fonctionnant à une fréquence de l'ordre de 4 MHz. Dans cet exemple, la puissance appliquée est fixée à 18 kW pour un débit gazeux total de 60 L.min⁻¹.

Les agrégats sont stockés dans un bac et transportés dans le plasma à l'aide d'un gaz vecteur d'argon dont le débit est fixé à 3 L.min⁻¹. L'injection se fait à travers un injecteur en graphite dont le diamètre a été réduit d'un facteur 2 au niveau de la zone d'injection afin d'augmenter la vitesse des particules en sortie pour forcer leur injection dans le jet plasma.

L'injection se fait en zone post -décharge en l'occurrence à une distance de 2 cm de la sortie de la torche plasma. Le temps de séjour des agrégats est d'environ 15 ms. Les agrégats entrainés dans l'écoulement plasma subissent une désoxydation de surface par réaction chimique avec les radicaux hydrogénés et une fusion à coeur par le traitement thermique.

Les particules fondues viennent ensuite alimenter la surface d'un bain de silicium préalablement fondu à l'aide d'un système de chauffage inductif de fréquence 250 kHz et d'une puissance de 30 kW. La quantité de silicium préalablement fondue est d'environ 1 kg, les dimensions du creuset étant 40 x 40 x 40 cm. La surface du bain est située à 10 cm en dessous de la sortie de la torche.

Le bilan matière, calculé en faisant le rapport de la masse de silicium récupérée par rapport à la masse des poudres en entrée, permet de conclure à un rendement matière de l'ordre de 60 à 70 %. A la fin de l'essai un lingot de silicium issu des poudres de recyclage est obtenu pour être introduit en mélange avec du matériau standard dans la chaine de fabrication du silicium massif.
[1] T. Y. Wang, Y. C. Lin, C. Y. Tai, C. C. Fei, M. Y. Tseng, C. W., LanProgress in photovoltaics: Research and Applications, 2009, 17:155-163.
[2] Ferhad Dadabhai, Franco Gaspari, Stefan Zukotynski,a) and Colby Bland J. Appl. Phys. 80 (11), 1996, 6505-6509.
[3] A.A.Bergh, The BELL Technical system Journal, 1965, 261-271.
[4] Alexander Fridman, Plasma Chemistry, Cambridge University Press, 2008, 978 pages.
[5] M.Benmansour, E. Francke, D.Morvan, Thin Solid Films, Vol.403, 2002, 112-115.
[6] S. Magnaval, M. Arnold, I. Cazard-Juvernat, E. Francke, D. Morvan, J. Amouroux, Progress in plasma processing of materials, proceedings of the international thermal plasma processes conference, Begell house, US, 1997,291-298.

## Revendications

1. Procédé utile pour la désoxydation de particules de silicium comprenant au moins les étapes consistant à :
(i) disposer de particules de silicium oxydées en surface et dotées d'une taille moyenne inférieure ou égale à 10 µm,
(ii) formuler lesdites particules à l'état d'agrégats d'une taille moyenne allant de 20 à 300 µm,
(iii) mettre en contact lesdits agrégats de l'étape (ii) avec un plasma thermique véhiculant des radicaux hydrogène dans des conditions propices à leur désoxydation et à leur non évaporation, la mise en contact étant réalisée en zone post-décharge ; et
(iv) récupérer un matériau désoxydé selon l'étape (iii) dans un bain de silicium liquide.

2. Procédé selon la revendication 1, dans lequel lesdites particules de silicium oxydées en surface de l'étape (i) présentent une teneur en oxygène supérieure ou égale à 20 % en poids par rapport à leur poids total.

3. Procédé selon la revendication 1 ou 2, dans lequel les particules de silicium oxydées en surface de l'étape (i) présentent en surface une couche d'oxyde de silicium d'une épaisseur allant de 5 nm à 50 nm.

4. Procédé selon l'une quelconque des revendications précédentes, dans lequel lesdites particules de silicium oxydées en surface de l'étape (i) sont dotées d'une taille moyenne variant de 100 nm à 10 µm, de préférence de 200 nm à 2 µm.

5. Procédé selon l'une quelconque des revendications précédentes, dans lequel lesdits agrégats de l'étape (ii) ont une taille moyenne allant de 50 µm à 200 µm.

6. Procédé selon l'une quelconque des revendications précédentes, dans lequel lesdits agrégats de l'étape (ii) sont formés par atomisation séchage desdites particules de silicium.

7. Procédé selon l'une quelconque des revendications précédentes, dans lequel le gaz au sein duquel le plasma de l'étape (iii) est formé, comprend un gaz inerte choisi parmi l'argon, l'hélium, le néon et leurs mélanges ainsi que de l'hydrogène dans une proportion allant de 0,5 à 50 % volumique, de préférence de 1 à 25 % volumique.

8. Procédé selon l'une quelconque des revendications précédentes, dans lequel le plasma de l'étape (iii) est généré à partir d'une torche à plasma, de préférence à l'aide d'une torche à plasma inductif de type radiofréquence.

9. Procédé selon l'une quelconque des revendications précédentes, dans lequel lesdits agrégats sont injectés au contact dudit plasma en zone post-décharge, *via* un gaz porteur, de préférence un gaz inerte, en particulier de l'argon.

10. Procédé selon l'une quelconque des revendications précédentes, dans lequel l'étape (iv) de récupération du matériau désoxydé est opérée en continu dans ledit bain de silicium liquide.

11. Procédé selon l'une quelconque des revendications précédentes, comprenant une étape (v) dans laquelle le bain de silicium liquide contenant le matériau désoxydé de l'étape (iii) subit un traitement avec ledit plasma thermique pour parfaire la désoxydation.

12. Procédé selon l'une quelconque des revendications précédentes, dans lequel le matériau obtenu à l'étape iv) ou le cas échéant à l'étape v) présente une teneur en oxygène inférieure ou égale à 10 % en poids, de préférence inférieure ou égale à 5 % en poids par rapport au poids total dudit matériau.

## Patentansprüche

1. Verfahren zur Desoxidation von Siliziumpartikeln, das wenigstens die Schritte aufweist, die bestehen in:
(i) Bereitstellen von Siliziumpartikeln, die an der Oberfläche oxidiert sind, mit einer mittleren Größe kleiner oder gleich 10 µm,
(ii) Überführen der genannten Partikel in einen aggregierten Zustand mit einer mittleren Größe von 20 bis 300 µm,
(iii) in Kontakt bringen der Aggregate aus Schritt (ii) mit einem thermischen Plasma, das Wasserstoffradikale liefert, unter Bedingungen, die geeignet sind, sie zu desoxidieren ohne sie zu verdampfen, wobei das in Kontakt bringen in einer Nach-Entladezone erfolgt; und
(iv) Zurückgewinnen eines desoxidierten Materials gemäß Schritt (iii) in einem Bad aus flüssigem Silizium.

2. Verfahren nach Anspruch 1, bei dem die genannten, an der Oberfläche oxidierten Siliziumpartikel gemäß Schritt (i) einen Gehalt an Sauerstoff haben, der größer oder gleich 20 Gew.% ist, bezogen auf ihr Gesamtgewicht.

3. Verfahren nach Anspruch 1 oder 2, bei dem die an der Oberfläche oxidierten Siliziumpartikel nach Schritt (i) an der Oberfläche eine Schicht aus Siliziumoxid mit einer Dicke von 5 bis 50 nm haben.

4. Verfahren nach einem der vorstehenden Ansprüche, bei dem die genannten, an der Oberfläche oxidierten Siliziumpartikel nach Schritt (i) eine mittlere Größe zwischen 100 nm und 10 µm haben, vorzugsweise von 200 nm bis 2 µm.

5. Verfahren nach einem der vorstehenden Ansprüche, bei dem die genannten Aggregate nach Schritt (ii) eine mittlere Größe von 50 µm bis 200 µm haben.

6. Verfahren nach einem der vorstehenden Ansprüche, bei dem die genannten Aggregate nach Schritt (ii) durch Sprühtrocknen der genannten Siliziumpartikel gebildet werden.

7. Verfahren nach einem der vorstehenden Ansprüche, bei dem das Gas, in dem das Plasma nach Schritt (iii) gebildet wird, ein Inertgas, das ausgewählt ist unter Argon, Helium, Neon und Gemischen hieraus, sowie Wasserstoff in einem Anteil von 0,5 bis 50 Vol.%, vorzugsweise 1 bis 25 Vol.% enthält.

8. Verfahren nach einem der vorstehenden Ansprüche, bei dem das Plasma nach Schritt (iii) von einem Plasmabrenner erzeugt wird, vorzugsweise mit Hilfe eines induktiven Radiofrequenz-Plasmabrenners.

9. Verfahren nach einem der vorstehenden Ansprüche, bei dem die genannten Aggregate in der Nach-Entladezone über ein Trägergas, vorzugsweise ein Inertgas, insbesondere Argon, in das Plasma injiziert werden.

10. Verfahren nach einem der vorstehenden Ansprüche, bei dem der Schritt (iv) der Zurückgewinnung des desoxidierten Materials kontinuierlich in dem genannten Bad aus flüssigem Silizium ausgeführt wird.

11. Verfahren nach einem der vorstehenden Ansprüche, mit einem Schritt (v), in dem das Bad aus flüssigem Silizium, das das desoxidierte Material nach Schritt (iii) enthält, einer Behandlung mit dem genannten thermischen Plasma unterzogen wird, um die Desoxidation zu vervollkommnen.

12. Verfahren nach einem der vorstehenden Ansprüche, bei dem das Material, das man in Schritt (iv) oder ggf. in Schritt (v) enrthält, einen Gehalt an Sauerstoff aufweist, der kleiner oder gleich 10 Gew.% ist, vorzugsweise kleiner oder gleich 5 Gew.%, bezogen auf das Gesamtgewicht des genannten Materials.

## Claims

1. A process useful for deoxidising particles of silicon comprising at least the steps consisting in:
(i) having surface-oxidized particles of silicon that have an average size less than or equal to 10 µm,
(ii) formulating these particles into aggregates with an average size ranging from 20 to 300 µm,
(iii) bringing these aggregates from step (ii) into contact with a thermal plasma conveying hydrogen radicals under conditions favourable to their deoxidisation and non-evaporation, contact being made in the post-discharge area; and
(iv) recovering a deoxidised material according to step (iii) in a liquid silicon bath.

2. Process according to claim 1, in which said surface-oxidized particles of silicon from step (i) have an oxygen content greater than or equal to 20% by weight in relation to their total weight.

3. Process according to claim 1 or 2, in which the surface-oxidized particles of silicon from step (i) have a layer of silicon oxide with a thickness ranging from 5 nm to 50 nm on the surface.

4. Process according to any one of the previous claims, in which said surface-oxidized particles of silicon from step (i) have an average size varying from 100 nm to 10 µm, preferably from 200 nm to 2 µm.

5. Process according to any one of the previous claims, in which said aggregates from step (ii) have an average size ranging from 50 µm to 200 µm.

6. Process according to any one of the previous claims, in which said aggregates from step (ii) are formed by spray drying said particles of silicon.

7. Process according to any one of the previous claims, in which the gas within which the plasma from step (iii) is formed comprises an inert gas selected from argon, helium, neon and their mixtures as well as hydrogen in a proportion ranging from 0.5 to 50% by volume, preferably from 1 to 25% by volume.

8. Process according to any one of the previous claims, in which the plasma from step (iii) is generated from a plasma torch, preferably using a radio frequency type inductive plasma torch.

9. Process according to any one of the previous claims, in which said aggregates are injected on contact with said plasma in the post-discharge area via a carrier gas, preferably an inert gas, particularly argon.

10. Process according to any one of the previous claims, in which step (iv) for recovery of the deoxidised material is carried out continuously in said liquid silicon bath.

11. Process according to any one of the previous claims, comprising a step (v) in which the liquid silicon bath containing the deoxidised material from step (iii) undergoes treatment with said thermal plasma to complete deoxidisation.

12. Process according to any one of the previous claims, in which the material obtained in step iv) or where appropriate in step v) has an oxygen content less than or equal to 10% by weight, preferably less than or equal to 5% by weight in relation to the total weight of said material.
